# EUROPÄISCHE PATENTSCHRIFT

(11) **EP 0 739 327 B1**
(45) Veröffentlichungstag und Bekanntmachung des Hinweises auf die Patenterteilung: **03.04.2002**
(21) Anmeldenummer: 95904428.0
(22) Anmeldetag: 06.12.1994
(51) Int. Cl.: C05F 11/00, C05F 9/04, C05G 1/00

(54) **KULTURSUBSTRAT UND VERFAHREN ZU DESSEN HERSTELLUNG**
CULTIVATION SUBSTRATE AND PROCESS FOR PRODUCING IT
SUBSTRAT DE CULTURE ET SON PROCEDE DE FABRICATION

(30) Priorität: 18.01.1994 DE 4401279
(43) Veröffentlichungstag der Anmeldung: 30.10.1996
(73) Patentinhaber: Allplant Entwicklungs- und Marketing GmbH, 40878 Ratingen (DE)
(72) Erfinder: WILHELM, Hermann-Josef, D-46509 Xanten (DE); ROGMANS, Maria, D-46509 Xanten (DE)
(74) Vertreter: Grünecker, Kinkeldey, Stockmair & Schwanhäusser Anwaltssozietät
(86) Internationale Anmeldenummer: EP9404064
(87) Internationale Veröffentlichungsnummer: WO9519328

(56) Entgegenhaltungen:
- DE-A- 4 126 347
- DATABASE WPI Section Ch, Week 9411 Derwent Publications Ltd., London, GB; Class C04, AN 94-083632 & AU,D,4 424 093 (KRIEDEMANN B W) , 3.Februar 1994
- DATABASE WPI Section Ch, Week 8322 Derwent Publications Ltd., London, GB; Class A97, AN 83-52518K & JP,A,58 067 399 (SANYO CHEM IND LTD) , 21.April 1983

## Beschreibung

Die Erfindung betrifft ein Kultursubstrat, sowie ein Verfahren zu dessen Herstellung.

Als Kultursubstrat wird im Gartenbau vorwiegend Torf verwendet. Im biologischen Sinn ist Torf die Humusform der Moore, insbesondere der Hochmoore, die zu den besonders bedrohten Lebensräumen gehören; zahlreiche dort lebende Pflanzen und Tiere füllen die rote Liste der vom Aussterben bedrohten Arten. Doch noch immer werden alljährlich durch den Torfabbau ca. 1000 ha Hochmoorfläche allein in der Bundesrepublik Deutschland trocken gelegt und alljährlich werden über 8 Millionen Kubikmeter Torf in unseren Gartenanlagen und im Erwerbsgartenbau verwendet. Bis zu 10000 Jahre benötigen Moore zu ihrer Entstehung - und in nur wenigen Jahrzehnten werden sie zerstört sein, wenn der Torfabbau nicht gestoppt wird. Der Verzicht, besser der Ersatz, von Torf im Gartenbau und Hobbybereich hilft, die Moore zu erhalten.

Den positiven Wirkungen des Torfes, wie z.B. die Bodenstrukturverbesserung, stehen aber sehr viele Nachteile gegenüber:
* Torf ist kein Dünger, wie es die Bezeichnung "Düngetorf" vortäuscht; er enthält praktisch keine Pflanzennährstoffe.
* Torf hat einen sehr niedrigen pH-Wert (pH 3-4) und versauert somit den Boden. Diese Versauerung führt zu Nährstoffmangel und erfordert wiederum zusätzliche kostspielige, umweltschädliche Düngung.
* Das Wasserspeicherungsvermögen des Torfes ist sehr gering. Der Torf verliert sehr schnell seine Feuchtigkeit und liefert dann im Vergleich zu anderen organischen Materialien (Kompost, Rindenmulch) nur sehr geringe Humusmengen.
* In Sandböden ist die Wirkung durch Torfeinsatz meist sehr schnell erschöpft, während in schweren Lehmböden aufgrund unzureichender Luftzufuhr eine Verkohlung ablaufen kann.
* Besonders wirkungslos ist das Abdecken des Bodens mit Torf, da der Torf gerade an der Oberfläche besonders leicht austrocknet. Die positive Wirkung einer Bodenabdeckung kann mittels Torf nicht erreicht werden.

Bis zum heutigen Tage wurden bereits eine Reihe von "Torfersatzprodukten" entwickelt, die einen Teil des Torfes, der für gartenbauliche Zwecke verwendet wird, ersetzen können:
Ersatzstoffe organischer Art:
Rindenprodukte, Komposte, Reisspelzen, Kokosfasern, Baumwollabfälle
Ersatzstoffe mineralischer Art: Blähton, Blähschiefer, Steinwolle, Sand und Kies, Bims, Lavalite, Perlite, Vermiculite, etc.
Ersatzstoffe synthetischer Art: Styromull, Hygromull, Kunststoffborsten, etc.

Einige negativen Eigenschaften dieser Produkte machen oft den Einsatz höherer Mischanteile in Kultursubstraten unmöglich. Folgende Kriterien müssen beim Einsatz dieser Produkte berücksichtigt werden:
- Salzgehalt
- Nährstoffgehalt
- Stickstoffestlegung
- Gehalt an Schwermetallen und gesundheitsschädlichen Fasern (Steinwolle, Kunststoffborsten, organische Schadstoffe)
- Wasserspeicherungskapazität
- Luftkapazität
- Strukturstabilität
- Ionenaustauschkapazität
- einheitliche Beschaffenheit
- Preis
- Verfügbarkeit
- Transportkosten
- Ökobilanz

Torfersatzstoffe mineralischer und synthetischer Art besitzen meist einen zu hohen Salzgehalt und eine mangelhafte Strukturstabilität; ihr Einsatz führt zu einer starken Stickstoffbindung und einem schlechten Lufthaushalt im Boden. Synthetische Ersatzstoffe sind zudem meist gesundheitsschädlich. Auch die Entsorgung und Rückführung in den biologischen Kreislauf bereitet bei mineralischen und synthetischen Torfersatzprodukten Schwierigkeiten.

Bisher verwendete organische Torfersatzprodukte besitzen ebenfalls Nachteile. Beispielsweise enthält Kompost aus Gartenund Küchenabfällen, Müll oder Klärschlamm meist Rückstände von Pflanzenschutzmitteln, Schwermetallen, carcinogenen Kohlenwasserstoffen, Antibiotika oder anderen Fremdstoffen. Die Herstellung von Kompost ist oft mit üblem Geruch verbunden; weiterhin können die vorstehend genannten Fremdstoffe durch Sickerwasse die Qualität des Grundwassers negativ beeinflussen.

Die deutsche Offenlegungsschrift DE A 41 26 347 beschreibt ein durch die Kompostierung von Ausgangsstoffen mit hohem Nährstoffgehalt gewonnenes Substrat. Dieses Substrat wird als Bodenverbesserungsmittel, Kultursubstrat oder Blumenerden verwendet und ist gekennzeichnet durch einen Anteil von Miscanthus.

Zusammenfassend wird hervorgehoben, daß kein allgemein verwendbarer Ersatzstoff auf dem Markt erhältlich war, der auch nur annähernd die gleichen Eigenschaften von Weißtorf besitzt. Der für ein optimales Pflanzenwachstum wichtige Luftporenanteil bei gleichzeitig hohem Wasserhaltevermögen wurde mit den bisher bekannten Ersatzprodukten nicht erreicht.

Die Aufgabe der vorliegenden Erfindung bestand deshalb darin, ein Material zur Verfügung zu stellen, das die wesentlichen chemischen und physikalischen Eigenschaften von Weißtorf aufweist und darüber hinaus dahingehend verbessert ist, daß es im Vergleich zu Weißtorf beispielsweise einen günstigeren pH-Wert, einen höheren Luftporenanteil und Düngergehalt besitzt. Weiterhin sollte die Herstellung des Materials auf eine umweltfreundliche Weise, kostengünstig und standardisierbar möglich sein.

Die vorliegende Erfindung stellt ein Kultursubstrat zur Verfügung, das sich hervorragend als Torfersatz eignet. Das erfindungsgemäße Kultursubstrat enthält zerkleinerte Pflanzen, ausgewählt aus Staudenknöterich, C₄-Pflanzen und Pflanzen aus den Gattungen Cannabis und Dicksonia, ausgenommen ist durch Kompostierung gewonnenes Kultursubstrat, welches einen Anteil an Miscanthus enthält.

Vorzugsweise enthält das Kultursubstrat zerkleinerte polyploide Staudenknöterich-Pflanzen.

Der Staudenknöterich (Polygonum sachalinense, Reynoutria sachalinense oder Reynoutria japonica), wurde Mitte des vorigen Jahrhunderts aus Südsachalin - einer Insel vor der Ostküste Rußlands - als Zier- und Futterplanze nach Europa eingeführt. Seitdem kommt er mit einer verwandten Art, dem japanischen Staudenknöterich, oft verwildert an Bachläufen oder Waldrändern vor. Der Vorteil von Staudenknöterich liegt unter anderem darin, daß dieser schnell nachwächst und mit herkömmlichen landwirtschaftlichen Maschinen ohne hohen Energieverbrauch geerntet werden kann. Bisher bekannte und verwilderte Staudenkulturen erreichten einen Ertrag von 50 bis 150 Tonnen Frischbiomasse pro Hektar und Jahr. Ein weiterer Vorteil ist, daß beim Anbau von Staudenknöterich keine Pflanzenschutzmittel eingesetzt werden müssen, da bisher keine Schädlinge bekannt sind.

Im Rahmen der vorliegenden Erfindung ist es gelungen, unter Verwendung von Colchizin eine Chromosomenzahlvermehrung (Polyploidisierung) bei Staudenknöterich zu erreichen, wodurch es ermöglicht wurde, besonders ertragreiche Sorten anzubauen. Durch Anbau von polyploidem Staudenknöterich wird ein Ernteertrag von 200 bis 500 Tonnen Frischbiomasse pro Hektar und Jahr erhalten. Im folgenden wird beschrieben, wie eine Polyploidisierunmg bei Staudenknöterich erreicht wurde:
1. Von Testfeldern wurden kräftige und frostresistente Staudenknöterich-Pflanzen ausgewählt; diese Pflanzen sind das Ausgangsmaterial für die in vitro-Vermehrung und für genetische Untersuchungen.
2. Zum Anlegen einer Sterilkultur wurden junge Sprossen in einer 1%-igen Natriumhypochloridlösung sterilisiert.
3. Mit Hilfe eines Mikroskops wurden die Meristeme der Pflanzen entnommen und steril auf ein Medium (Tabelle 1) gebracht. Da 80 bis 90% der entnommenen Meristeme nicht steril sind, werden diese Kulturen in den Reagenzgläsern bzw. Kulturgefäßen von Pilzen oder Bakterien überwuchert. Um einige sterile Ausgangspflanzen zu erhalten, müssen tausende von Meristemen entnommen und kultiviert werden.
4. Sterile Meristeme wurden anschließend auf unterschiedlichen Medien weitervermehrt, wodurch eine optimale Vermehrungsrate bestimmt wurde. Auf diese Weise wurden innerhalb von ca. 6 bis 12 Monaten Klone für die weitere Vermehrung aufgebaut.
5. Die Vermehrung der Chromosomen wurde durch Zugabe von Colchizin in das Wachstumsmedium induziert. Colchizin ist ein Inhaltsstoff der Herbstzeitlose (Colchicum annuum), welcher als Mitosehemmstoff wirkt. Colchizin wurde in Wasser gelöst und filtersterilisiert, da es thermolabil ist. Die Konzentration der Colchizinlösung lag im Bereich von 0,01 bis 0,50 Gew.-%.
6. Bei Verwendung einer stark konzentrierten Colchizinlösung war die Behandlungszeit sehr kurz, bei Verwendung einer schwach konzentrierten Lösung wurde die Behandlungszeit dementsprechend verlängert.
7. Nach der Behandlung wurden die Pflanzen mit sterilem Wasser gewaschen, um die verwendeten Chemikalien zu entfernen. Anschließend wurden die Meristeme auf ein Kulturmedium in einem verschließbaren Kulturgefäß gesetzt und unter künstlichem Licht (2000-2500 Lux, 16 Stunden) bei geeigneter Temperatur (25 +/- 1°C) und Luftfeuchtigkeit (50 % rel. Luftfeuchtigkeit) kultiviert.
8. Da Colchizin hochgiftig ist, überlebten nur wenige Meristeme diese Behandlung und von diesen hatten wiederum nur einige eine erhöhte Chromosomenzahl.
9. Jede Pflanze wurde mittels eines Cytometers untersucht. Anhand der Anzahl der Stomata und der Chloroplasten in den Zellen der Cuticula konnte festgestellt werden, ob sich die Chromosomenzahl der Pflanzenzellen verändert hatten. Polyploide Pflanzen besitzen bedeutend mehr dieser Komponenten. Weiterhin kann man eine Polyploidisierung aufgrund einer Vergrößerung der Epidermiszellen im Vergleich zu diploiden Zellen erkennen.
10. Eine Untersuchung der Wurzelspitzen ergab eindeutige Ergebnisse. Hierzu wurden die Chromosomen der Testpflanzen eingefärbt. Die Chromosomen spiralisieren sich in einem Ausmaß, daß sie unter dem Mikroskop gezählt werden können.
11. Polyploide Pflanzen bzw. Pflanzenteile wurden weitervermehrt und nach entsprechender Kultivierungszeit als Setzlinge auf Felder ausgebracht.

**Tabelle 1**

| **Zusammensetzung eines Nährmediums für die Vermehrung von Meristemen von Staudenknöterich- und C**_{**4**}**-Pflanzen** | | |
|---|---|---|
| CaCl₂ . 2H₂O | 440 mg/l | |
| KH₂PO₄ | 170 mg/l | |
| KNO₃ | 1900 mg/l | M S Macronte |
| NH₄ NO₃ | 1650 mg/l | |
| MgSO₄ . 7H₂O | 370 mg/l | |
| CoCl₂ . 6H₂O | 0,025 mg/l | |
| Na₂ MoO₄ . 2H₂O | 0,25 mg/l | |
| CuSO₄ . 5H₂O | 0,025 mg/l | |
| KJ | 0,83 mg/l | M S Micro |
| H₃ BO₃ | 6,2 mg/l | |
| MnSO₄ . 4H₂O | 22,3 mg/l | |
| Zn SO₄ . 7H₂O | 8,6 mg/l | |
| Na₂ . EDTA | 37,2 mg/l | |
| FeSO₄ . 7H₂O | 27,8 mg/l | |
| Nicotinsäure | 0,50 mg/l | |
| Pyridoxine (Vitamin B₆) | 0,50 mg/l | |
| Thiamine (Vitamin B1) | 1,0 mg/l | |
| Zucker | 30,0 g/l | |
| Agar-Agar | 6,5 g/l | |
| BAP (6-Benzyl-aminopurin) | 2,0 mg/l | |
| NAA (1-Naphthylessigsäure) | 0,01 mg/l | |
| GA3 (Gibberillinsäure) | 1,0 mg/l | |
| Adeninsulfat | 80,0 mg/l | |

Zur Polyploidisierung von Staudenknöterich kann auch Acenaphthen verwendet werden. Da Acenaphthen nicht wasserlöslich ist, werden Kristalle dieser Substanz ungelöst auf den Vegetationspunkt der Meristeme aufgebracht. Außerdem werden die zu behandelnden Pflanzenteile unter Glasglocken gestellt, deren Innenseiten ebenfalls mit Acenaphthen-Kristallen belegt sind.

Unter der Glasglocke bildet sich in Abhängigkeit von der Temperatur ein Dampfdruck der sublimierten Substanz, von dessen Höhe die Behandlungsdauer abhängt.

Staudenknöterich-Pflanzen, die hohe Biomasseerträge liefern, können auch durch gezielte Selektion spontan mutierter Pflanzen bzw. Pflanzenteile erhalten werden.

Es wurde gefunden, daß ein ausgehend von Staudenknöterich hergestelltes Kultursubstrat Stoffe enthält, die darin eingetopfte Pflanzen kräftigen und vor einem eventuellen Pilzbefall, wie Mehltau oder Nelkenrost, und der bakteriellen Krankheit Feuerbrand schützen. Pflanzen, die in dieses Kultursubstrat eingetopft wurden, weisen bestimmte Stoffwechselveränderungen auf. Bereits wenige Stunden nach dem Eintopfen steigen die Konzentrationen verschiedener Enzyme in den Pflanzen an. Dazu gehören die Chitinasen, die Bestandteile der Pilzzellwand abzubauen vermögen. Daher liegt die Vermutung nahe, daß diese Stoffwechselprodukte maßgeblich an der Abwehr der Pflanzen gegen Pilzbefall beteiligt sind. Auch andere Enzyme werden vermehrt produziert, die weitere Abwehrreaktionen der Pflanzen bewirken können. Insgesamt ist der Wirkmechanismus, der der durch das erfindungsgemäße Substrat induzierten Resistenz zugrundeliegt, sehr kompliziert und noch nicht in allen Einzelheiten geklärt.

Das erfindungsgemäße Kultursubstrat enthält zusätzlich zu oder anstelle von zerkleinerten Staudenknöterich-Pflanzen zerkleinerte C₄-Pflanzen, ausgenommen Miscanthus.

Als C₄-Pflanzen werden eine Reihe von Pflanzenarten bezeichnet, die sich durch hohe Photosyntheseraten auszeichnen. Diese beruhen auf einer effektiven Kohlendioxid-Verwertung, auch bei geringem CO₂-Angebot. Das erste nachweisbare Reaktionsprodukt ist ein C₄-Körper (Oxalacetat, Malat, Aspartat) im Gegensatz zu dem C₃-Körper 3-Phospoglycerinsäure bei den C₃-Pflanzen. Die Morphologie der C₄-Pflanzen unterscheidet sich zu derjenigen der C₃-Pflanzen darin, daß die assimilierenden Zellen bei den C₄-Pflanzen kranzartig um die Blattgefäßbündel angeordnet sind, während diese bei den C₃-Pflanzen üblicherweise geschichtet sind.

Bevorzugt ist ein Kultursubstrat, das zerkleinerte C₄-Pflanzen aus den Gattungen Sorghum, Andropogon, Coelorhachis, Coix, Cymbopogon, Echinoloa, Erianthus, Hyparrhenia, Leptochloa, Panicum, Paspalum, Pennisetum, Saccharum, Schizachyrum, Spartina, Sporobolus, Themeda, Thripsacum, Vetiveria und/oder Zea enthält.

Besonders bevorzugt enthält das erfindungsgemäße Kultursubstrat zerkleinerte C₄-Pflanzen der Arten: Sorghum allmum, Sorghum halapense, Sorghum versicolor, Sorghum bicolor (Sorte: CV-Silk), Sorghum bicolor var. arundinacaeum, Sorghum bicolor var. verticilliflorum, Sorghum caucasicum, Sorghum drummondii, Sorghum giganteum, Sorghum milliaceum, Sorghum milliaceum var. parvispiculum, Sorghum nidium, Sorghum pugionifolium, Sorghum serratum, Sorghum stapffii, Sorghum sudanense, Sorghum vulgare, Sorghum zizanioides und Sorghum adans).

Durch jahrelange Auslese auf Versuchsfeldern ist es den Erfindern gelungen, die wichtigsten Sorten der C₄-Pflanzenarten Sorghum allmum, Sorghum bicolor (Sorte: CV-Silk) und Sorghum halapense für das europäische Klima winterfest zu züchten.

Um besonders ertragreiche C₄-Pflanzen zu erhalten, können die vorstehend für Staudenknöterich beschriebenen Polyploidisierungsmethoden durchgeführt werden. Da C₄-Pflanzen zu den Monokotyledonen gehören, deren Spitzenmeristen durch Blätter gut geschützt ist, schneidet man im Keimpflanzenstadium die Koleoptile kurz über dem Spitzenmeristem ab und trägt das Colchizin auf den Torso auf. Der Blattapparat wird nach wenigen Tagen durch das Nachwachsen junger Blätter wieder aufgebaut.

Im Fall der C₄-Pflanzen können auch angekeimte Samen in Petrischalen für etwa 3 bis 4 Stunden einer dünnen Schicht Colchizinlösung ausgesetzt werden. Die günstigste Konzentration der wäßrigen Colchizinlösung ist artabhängig. Sie schwankt bei C₄-Gräsern zwischen 0,05 - 0,4 %. Die Samen müssen während der Behandlung - vor allem bei einer längeren Applikation von Colchizin - regelmäßig beobachtet werden. Bei auftretender Wurzelverdickung ist die Behandlung abzubrechen. Danach werden die Samen gründlich gewaschen und in Pikierkästen ausgesät.

Weiterhin ergeben zerkleinerte Pflanzen aus den Gattungen Cannabis (Hanf) und Dicksonia (Baumfarn) das erfindungsgemäße Kultursubstrat. Bevorzugt ist ein Kultursubstrat aus zerkleinerten Pflanzen der Arten Cannabis sativa, Cannabis sativa ssp. indica, Cannabis sativa ssp. sativa, Cannabis sativa ssp. sativa gigantea (var. chinensis), Cannabis sativa ssp. sativa (Dc., Cannabis gigantea Del. ex. Vilm; Riesenhanf) oder Dicksonia antarctica.

Vorzugsweise enthält das Kultursubstrat zerkleinerte Staudenknöterich- und/oder C₄-Pflanzen mit einer natürlichen Restfeuchte von 15 bis 25%, besonders bevorzugt von 18 bis 20%. Pflanzen mit einer entsprechenden Restfeuchte können dadurch erhalten werden, daß diese solange auf dem Halm gelassen werden, bis sie jahreszeitlich bedingt ihr Wachstum im Herbst einstellen und die Nährstoffe aus den oberirdischen Pflanzenteilen in das Wurzelrhizom zurückverlagern. Sobald die Pflanzen die vorstehend angegebene Restfeuchte besitzen, werden sie mittels landwirtschaftlicher Maschinen geerntet und anschließend wird die gehäckselte Biomasse beispielsweise mittels einer fahrbaren Hammermühle grob oder fein zermahlen.

Zum Zerkleinern der Pflanzen können beispielsweise Trommelhacker, Trommelreißer, Scheibenhacker, Doppelstrommühlen, drucklose oder Druckrefiner, Rindenmühlen, Spanaufteiler, Deckschichtmühlen, Hackschnitzelzerspanner, Schlagzerspaner und ähnliche Maschinen, die zum Aufschluß von Hackschnitzeln, Spänen und Einjahrespflanzen geeignet sind, verwendet werden.

Während des Zerkleinerungsprozesses, oder danach, können abhängig von der späteren Verwendung des Kultursubstrates Zuschlagstoffe zugegeben werden.

Solche Zuschlagstoffe können beispielsweise Pflanzenöle sein. Die Zumischung von Pflanzenölen verhindert eine Staubbildung durch das erfindungsgemäße Kultursubstrat. Als Pflanzenöle können beispielsweise Soja- , Raps- und Sonnenblumenöl verwendet werden. Vorteilhaft ist es, 1 bis 5 1 Pflanzenöl unter 1 m³ Kultursubstrat unterzumischen.

Als Zuschlagstoffe eignen sich weiterhin Polyacrylamidgranulate, Tonmineralmischungen, Lavagesteinsmehl, Bims, Bentonit, Sand, Altpapier, Flugasche aus der Braunkohleverbrennung, Braunkohleabfälle und jegliche Art von Düngemitteln.

Polyacrylamidgranulate verbessern das erfindungsgemäße Kultursubstrat dadurch, daß es eine große Wasserspeicherungskapazität besitzt. Besonders vorteilhaft sind gelbildende, quervernetzte Polyacrylamidgranulate, wie sie beipielsweise unter der Bezeichnung Polywater-Aqua- Plus® von der Firma Polyplant GmbH, Xanten, erhältlich sind.

Die Zugabe von Tonmineralmischungen zu dem erfindungsgemäßen Kultursubstrat ermöglicht die Bildung von Ton-Humus-Komplexen.

Weiterhin eignen sich in vorteilhafter Weise organische Zuschlagstoffe, wie z.B. Seetangextrakt, Rhizinusschrot, Hornspäne, Hornmehl, Blutmehl, Weichholzspäne, Baumwollabfälle, Flachsabfälle, Textilabfälle, Kokosfasern und Lauberde.

Ein flüssiger Seetangextrakt kann beispielsweise ausgehend von Ascophyllum nodosum nach gängigen Verfahren hergestellt werden. Käuflich erwerbbar ist Seetangextrakt beispielsweise unter der Bezeichnung Maxicrop Triple® von der Firma Maxicrop International Ltd., Norwegen.

Für spezielle Anwendungsgebiete des erfindungsgemäßen Kultursubstrats können als Zuschlagstoffe weiterhin Stickstoff-fixierende Bakterien, Pflanzenhormone, Vitamine, Fungizide und Aminosäuren verwendet werden.

Als Stickstoff-fixierende Bakterien eignen sich beispielsweise Bakterien der Gattung Azotobacter. Ein Azotobacterenthaltendes Präparat für eine Anwendung in der Landwirtschaft ist unter der Bezeichnung "Krishio Mitra Liquid Biofertiliser® " von der Firma Suyash Sankalp Exports Pvt. Ltd., Pune, Indien, erhältlich. Als Pflanzenhormone können Auxine, Zytokinine, Gibberelline etc. eingesetzt werden. Vitamine können ausgewählt werden aus Thiamin, Riboflavin, Pyridoxin, Cobalamin, Nikotinsäure, Pantothensäure, Folsäure und Biotin.

Ein Präparat, das eine als Zuschlagstoff für das erfindungsgemäße Kultursubstrat geeignete Mischung aus Pflanzenhormonen, Vitaminen, Fungiziden, Aminosäuren und weiteren Nährstoffen enthält, kann unter der Bezeichnung "Vitormone® " von der Firma Suyash Sankalp Exports Pvt. Ltd., Pune, Indien erhalten werden.

Die folgende Tabelle 2 stellt die Eigenschaften eines erfindungsgemäßen Kultursubstrates aus zerkleinerten Sorghum allmum-Pflanzen denjenigen von Weißtorf gegenüber:

**Tabelle 2**

| Eigenschaften des erfindungsgemäßen Kultursubstrates aus Sorghum allmum-Pflanzen im Vergleich zu Weißtorf | | |
|---|---|---|
| Eigenschaften | erfindungsgemäßes Kultursubstrat | Weißtorf |
| pH-Wert | 6,2 | 3,0 - 4,5 |
| Trockenmasse in % | 86,945 % | 20,0 - 30,0 % |
| Total N in % | 0,34 % | 0,8 - 1,2 % |
| Total P in % | 1,70 % | 0,01 - 0,04 % |
| Total K in % | 3,70 | 0,01 - 0,03 % |
| C/N Verhältnis | 30 : 1 | 30 : 50 |
| Volumengew.,tr.in g/l | 220 g/l | 55-75 g/l |
| Volumengew.,feucht,in g/l | 1510 g/l | 150-180 g/l |

Wie der vorstehenden Tabelle entnommen werden kann, ist das erfindungsgemäße Kultursubstrat sehr nährstoffreich und somit hervorragend als Torfersatz geeignet. Das Substrat unterliegt wie alle organischen Materialien im Laufe der Zeit einer natürlichen, mikrobiellen Zersetzung. Da es sich bei den vorstehend genannten Pflanzen um stark Lignin- und markhaltige Biomasse handelt, wird das Kultursubstrat nur langsam abgebaut und größtenteils in Dauerhumus umgewandelt. Es verbessert die Struktur des Bodens, verhindert eine Bodenverdichtung oder -verkrustung, erhöht die Bodentemperatur und ist verträglich mit im Boden lebenden Organismen. Das erfindungsgemäße Kultursubstrat ist nicht phytotoxisch. Es eignet sich in hervorragender Weise im Garten- und Landschaftsbau und Erwerbsgartenbau, beim Obst-, Gemüse- und Weinanbau und in der Forstwirtschaft. Es kann weiterhin als Blumenerde verwendet werden. Da das Substrat Feuchtigkeit bindet, Geruchsbildung verhindert, nicht verklebt und langdauernd elastisch bleibt, eignet es sich auch als Einstreuung bei der Tierhaltung, insbesondere als Katzenstreu.

Die folgende Tabelle 3 zeigt eine Vergleichsanalyse zwischen Weißtorf, Schwarztorf und dem erfindungsgemäßen Kultursubstrat:

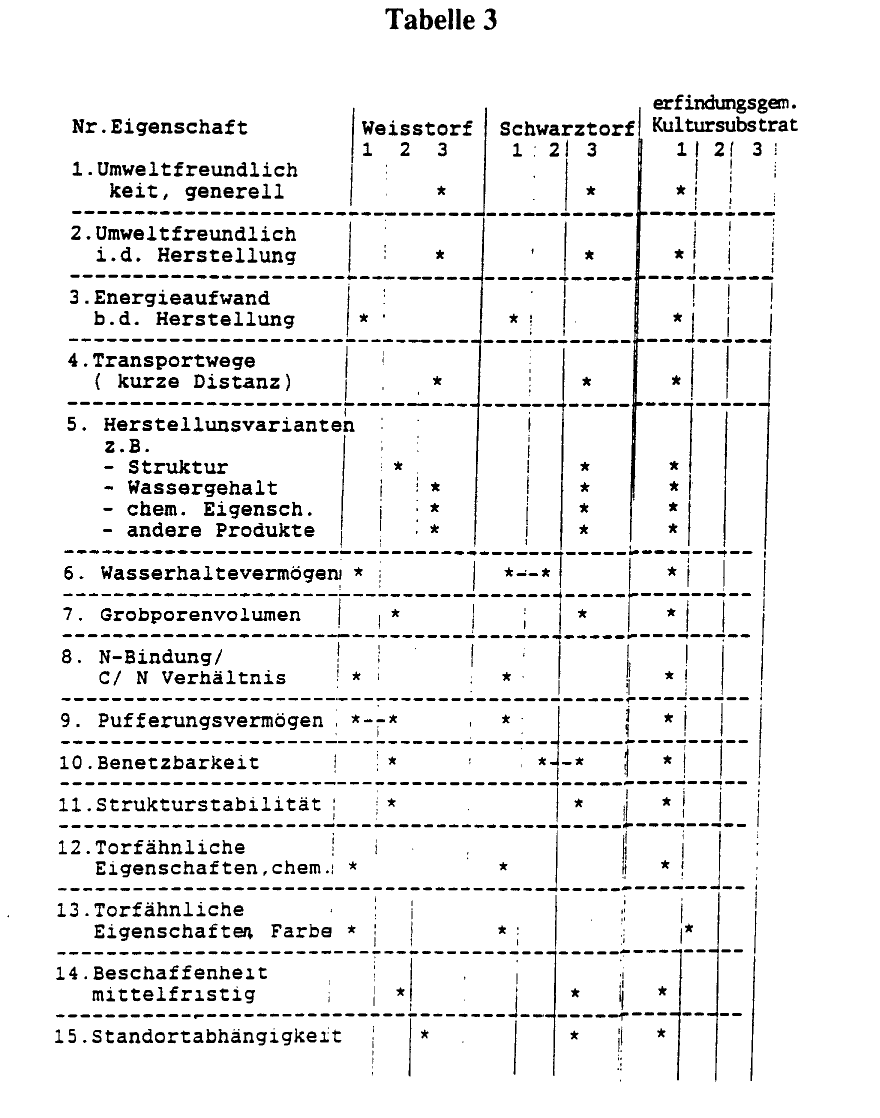

Es wird hervorgehoben, daß zusammen mit der erfindungsgemäßen Biomasse aus zerkleinerten Nutzpflanzen, insbesondere Staudenknöterich- oder C₄-Pflanzen, auch Stallmist (Rinder-, Schweine-, Hühner- oder Pferdemist) fermentiert werden kann. Das Ausbringen von nicht-fermentiertem Stallmist auf Ackerböden bringt verschiedene Probleme mit sich. Die wichtigsten negativen Auswirkungen seien hier kurz zusammengestellt:
* Stapelmist schadet aufgrund des Gehalts an schädlichen Stoffen (Indol, Skatol, Putrescin, Cadaverin, etc.) die Pflanzenwurzeln;
* beim Abbau von frischer organischer Substanz durch Mikroorganismen werden wurzelhemmende Substanzen freigesetzt;
* Stapelmist enthält lebensfähige Unkrautsamen und Krankheitserreger;
* durch faulenden Mist werden Schädlinge und Insekten angelockt, wie z.B. Kartoffelkäfer;
* Stapelmist kann infolge einer "Ionenkonkurrenz" die Mineralstoffaufnahme der Pflanzen hemmen.

Erst das gleichzeitige Fermentieren von Stallmist und erfindungsgemäßem Kultursubstrat ergibt einen Dünger, der bedenkenlos verwendet werden kann.

Die Erfindung betrifft weiterhin ein Verfahren zum Herstellen von Kultursubstrat, welches die folgenden Verfahrensschritte umfaßt:
a) Ernten von Pflanzen, ausgewählt aus Staudenknöterich, Pflanzen aus den Gattungen Cannabis und Dicksonia und C₄-Pflanzen, ausgenommen Miscanthus;
b) Zerkleinern der Pflanzen; und gegebenenfalls
c) Vermischen der so erhaltenen Biomasse mit mindestens einem Zuschlagsstoff.

Wie vorstehend bereits erwähnt, eignen sich zum Anbau bevorzugt polyploide Staudenknöterich- bzw. C₄-Pflanzen der vorstehend genannten Gattungen bzw. Arten.

Die landwirtschaftlich angebauten Pflanzen können mittels landwirtschaftlicher Maschinen, wie z.B. einem reihenunabhängigen Maisgebiß, geerntet und anschließend mittels der vorstehend erwähnten Maschinen grob oder fein zermahlen werden.

Vorzugsweise werden die Pflanzen zu einem Zeitpunkt geerntet, an dem die Pflanzen eine jahreszeitlich bedingte, natürliche Restfeuchte von 15 bis 25% besitzen.

Die zerkleinerten Pflanzen können vorzugsweise mit den vorstehend genannten Zuschlagstoffen vermischt werden.

Es ist besonders vorteilhaft, die geernteten und zerkleinerten Staudenknöterich- und/oder C₄-Pflanzen bzw. Pflanzen aus den Gattungen Cannabis und Dicksonia gegebenenfalls zusammen mit mindestens einem der vorstehend genannten Zuschlagstoffen nach gängigen Verfahren zu kompostieren.

Beispiele für besonders bevorzugte Zusammensetzungen des erfindungsgemäßen Kultursubstrats werden nachstehend aufgeführt:
1. pro Kubikmeter Kultursubstrat:
   70 Teile zerkleinerte Pflanzen
   20 Teile Sand
   10 Teile Polyacrylamid-Granulat, Korngröße 1-3 mm
   1 kg Algenextrakt, in 50 1 Wasser aufgelöst und untergemischt
2. pro Kubikmeter Kultursubstrat:
   70 Teile zerkleinerte Pflanzen
   29 Teile Bims
   1 Teil Polyacrylamid-Granulat, Korngröße 1-3 mm
   1 kg Algenextrakt
3. pro Kubikmeter Kultursubstrat:
   60 Teile zerkleinerte Pflanzen
   39 Teile Altpapier, geschreddert und angefeuchtet
   1 Teil Polyacrylamid-Granulat, Korngröße 1-3 mm
   1 kg Algenextrakt
5. pro Kubikmeter Kultursubstrat:
   333 Teile Sorghum allmum oder Sorghum halapense oder sonstige Sorghumarten, trocken geschreddert, 1-3 mm
   333 Teile oder Stroh oder Tompinambur (oberirdische Biomasse, 18-20% Restfeuchte), trocken geschreddert, 1-5 mm
   333 Teile Altpapier, in 0,5 mm Streifen geschreddert,
   5-15 kg Tonmineralmischung 2 (Tabelle 5)
   5-15 kg Tonmineralmischung 3 oder
   1 kg Polywater-Aqua-Plus® , 1-3 mm Korngröße
   4-5 kg Hornspäne oder 2-3 kg Hornmehl oder 1 kg Blutmehl oder
   1 kg Algenextrakt
8. pro Kubikmeter Kultursubstrat:
   333 Teile Sorghum, trocken geschreddert, 1-3 mm
   333 Teile Altpapier 0,5 mm, geschreddert und angefeuchtet
   333 Teile Sand und Bims, Bims 1-3 mm, zu gleichen Teilen
   5-15 kg Tonmineralmischung 2
   1 kg Polywater-Aqua-Plus® , 1-3 mm Korngröße oder Tonmineralmischung 3
   1-2 kg Harnstoff oder Hornspäne oder Hornmehl oder Blutmehl oder Rhizinusschrot oder Algenextrakt, aufgelöst in 10-15 1 Wasser, unter die obige Masse verteilt.

Um bei längerer Lagerung in Säcken eine Schimmelbildung im Kultursubstrat zu vermeiden, sollte dieses eine Restfeuchte von höchstens 18% besitzen. Alternativ können Konservierungsmittel zugegeben werden. Besonders empfehlenswert sind biologische Konservierungsmittel, wie z.B. Krappwurzeln.

**Tabelle 4**

| Tonmineralmischung 1 | | |
|---|---|---|
| Bestandteile Tonminerale | Mineralische Zusammensetzung | |
| | Montmorillonit | 70 - 75 % |
| | Illit | 15 - 20 % |
| | Quarz | 3 - 5 % |
| Hauptsächliche Begleitmineralien | Feldspat und Glimmer hohes Ionenaustauschvermögen | |
| Chemische Analyse | | |
| Kieselsäure (SiO₂) | 56,5 % | |
| Aluminiumoxid (Al₂O₃) | 20,8 % | |
| Eisenoxid (Fe₂O₃)) | 5,0 % | |
| Titanoxid (TiO₂)) | 0,3 % | |
| Calciumoxid (CaO) | 2,1 % | |
| Magnesiumoxid (MgO) | 3,4 % | |
| Kaliumoxid (K₂O) | 1,4 % | |
| Natriumoxid (Na₂O) | 2,3 % | |
| Glühverlust | 8,3 % | |
| | | |
| Mikronährstoffe | Mangan, Kupfer, Bor, | |
| pH-Wert (8 % wäßrige Suspension) | 9, Wasserbindevermögen reversibel (hoch) | |
| Kationenaustauschvermögen | 40 - 50 mval/ 100 g/Trockenton | |
| Wirksame (spezif.) Oberfläche | 5 - 7 ha / 1 kg Trockenton | |

**Tabelle 5**

| Tonmineralmischung 2 | |
|---|---|
| Kieselerde (SiO₂) | 50,5 % |
| Tonerde (Al₂O₃) | 24,0 % |
| Titanoxid (TiO₂) | 4,0 % |
| Eisenoxid (Fe₂O₃) | 13,5 % |
| Calciumoxid (CaO) | 3,0 % |
| Magnesiumoxid (MgO) | 3,4 % |
| Kaliumoxid (K₂O) | 0,6 % |
| Natriumoxid (Na₂O) | 10,0 % |
| Glühverlust | 10,0 % |
| | |

| Spurenelemente | |
|---|---|
| | |
| Blei | 5,0 mg/kg |
| Bor | 120,0 mg/kg |
| Cadmium | 20,2 mg/kg |
| Chrom | 95,0 mg/kg |
| Kobalt | 43,0 mg/kg |
| Kupfer | 39,0 mg/kg |
| Nickel | 52,0 mg/kg |
| Zink | 110,0 mg/kg |
| Mangan | 1600,0 mg/kg |
| | |

| Sonstige Daten: | |
|---|---|
| | |
| pH-Wert : | 5,2 |
| T-Wert : | 75 mval (100 g) |
| N : | 23 mg/l |
| P₂O₅ : | 277 mg/l |
| K₂O : | 203 mg/l |
| Mg : | 559 mg/l |
| Salz (als KCi) : | 0,23 g/l |

**Tabelle 6**

| **Tonmineralmischung 3** | | |
|---|---|---|
| Schüttgewicht, Körnung : | | 0,5 - 3,5 mm, 770 g/l |
| Porosität : | | 52 % |
| Wasserkapazität pro 1 Mineralgranulat : | | 600 - 800 cm³ je nach Körnung |
| pH-Wert : | | auf Dauer neutral |
| Farbe der Granulate Säure-, laugen- und frostbeständig : | | rot-gelb-braun |
| | | |

| Chemische Analyse (Richtwerte) | | |
|---|---|---|
| | | |
| Kieselsäure (SiO₂) | ca. 60,00 % | |
| Tonerde (Al₂O₃) | ca. 23,00 % | |
| Titanoxid (TiO₂) | ca. 1,90 % | |
| Eisenoxid (Fe₄O₃) | ca. 3 - 8 % | |
| Calciumoxid (CaO) | ca. 0,20 % | |
| Magnesiumoxid (MgO) | ca. 0,80 % | |
| Kaliumoxid (K₂O) | ca. 2,20 & | |
| Natriumoxid (Na₂O) | ca. 0,30 % | |
| Karbonat und Sulfat frei | | |

## Patentansprüche

1. Kultursubstrat, **gekennzeichnet durch** zerkleinerte Pflanzen, ausgewählt aus Staudenknöterich, C₄-Pflanzen und Pflanzen aus den Gattungen Cannabis und Dicksonia, ausgenommen **durch** Kompostierung gewonnenes Kultursubstrat, welches einen Anteil an Miscanthus enthält.

2. Kultursubstrat nach Anspruch 1, **gekennzeichnet durch** zerkleinerte polyploide Staudenknöterich- und/oder C₄-Pflanzen.

3. Kultursubstrat nach Anspruch 1, **gekennzeichnet durch** zerkleinerte C₄-Pflanzen aus den Gattungen Sorghum, Andropogon, Coelorhachis, Coix, Cymbopogon, Echinoloa, Erianthus, Hyparrhenia, Leptochloa, Panicum, Paspalum, Pennisetum, Saccharum, Schizachyrum, Spartina, Sporobolus, Themeda, Thripsacum, Vetiveria und Zea.

4. Kultursubstrat nach Anspruch 3, **gekennzeichnet durch** zerkleinerte C₄-Pflanzen der Arten Sorghum allmum, Sorghum halapense, Sorghum versicolor, Sorghum bicolor CV-Silk, Sorghum bicolor var. arundinacaeum, Sorghum bicolor var. verticilliflorum, Sorghum caucasicum, Sorghum drummondii, Sorghum giganteum, Sorghum milliaceum, Sorghum milliaceum var. parvispiculum, Sorghum nidium, Sorghum pugionifolium, Sorghum serratum, Sorghum stapffii, Sorghum sudanense, Sorghum vulgare, Sorghum zizanioides oder Sorghum adans.

5. Kultursubstrat nach einem der Ansprüche 1 bis 4, **gekennzeichnet durch** zerkleinerte Staudenknöterich- und/oder C₄-Pflanzen mit einer natürlichen Restfeuchte von 15 bis 25%.

6. Kultursubstrat nach Anspruch 5, **dadurch gekennzeichnet, daß** die natürliche Restfeuchte 18 bis 20% beträgt.

7. Kultursubstrat nach Anspruch 1, **gekennzeichnet durch** zerkleinerte Pflanzen der Arten Cannabis sativa, Cannabis sativa ssp. indica, Cannabis sativa ssp. sativa, Cannabis sativa ssp. sativa gigantea (var. chinensis), Cannabis sativa ssp. sativa (Dc., Cannabis gigantea Del. ex. Vilm; Riesenhanf) oder Dicksonia antarctica.

8. Kultursubstrat nach einem der Ansprüche 1 bis 7, **dadurch gekennzeichnet, daß** es zusätzlich mindestens einen Zuschlagstoff enthält.

9. Kultursubstrat nach Anspruch 8, **dadurch gekennzeichnet, daß** der Zuschlagstoff ausgewählt ist aus Pflanzenölen.

10. Kultursubstrat nach Anspruch 8, **dadurch gekennzeichnet, daß** der Zuschlagstoff ausgewählt ist aus Polyacrylamidgranulaten, Tonmineralmischungen, Lavagesteinsmehl, Bims, Bentonit, Sand, Altpapier, Flugasche aus der Braunkohleverbrennung, Braunkohleabfälle und Düngemitteln.

11. Kultursubstrat nach Anspruch 8, **dadurch gekennzeichnet, daß** der Zuschlagstoff ausgewählt ist aus Seetangextrakt, Rhizinusschrot, Hornspäne, Hornmehl, Blutmehl, Weichholzspäne, Baumwollabfällen, Flachsabfällen, Textilabfällen, Kokosfasern und Lauberde.

12. Kultursubstrat nach Anspruch 8, **dadurch gekennzeichnet, daß** der Zuschlagstoff ausgewählt ist aus Stickstoff-fixierenden Bakterien, Pflanzenhormonen, Vitaminen, Fungizide und Aminosäuren.

13. Verfahren zum Herstellen von Kultursubstrat, **gekennzeichnet durch** die Verfahrensschritte:
a) Ernten von Pflanzen, ausgewählt aus Staudenknöterich, Pflanzen aus den Gattungen Cannabis und Dicksonia und C₄-Pflanzen, ausgenommen Miscanthus;
b) Zerkleinern der Pflanzen; und gegebenenfalls
c) Vermischen der so erhaltenen Biomasse mit mindestens einem Zuschlagstoff.

14. Verfahren nach Anspruch 13, **dadurch gekennzeichnet, daß** die Pflanzen zu einem Zeitpunkt geerntet werden, an dem die Pflanzen eine jahreszeitlich bedingte, natürliche Restfeuchte von 15 bis 25 % besitzen.

15. Verfahren nach Anspruch 13 oder 14, **dadurch gekennzeichnet, daß** die Biomasse, gegebenenfalls zusammen mit Zuschlagstoffen, kompostiert wird.

16. Verfahren nach Anspruch 13 oder 14, **dadurch gekennzeichnet, daß** polyploide Staudenknöterich- und/oder C₄-Pflanzen geerntet werden.

17. Verfahren nach Anspruch 13 oder 14, **dadurch gekennzeichnet, daß** C₄-Pflanzen, ausgewählt aus den Gattungen Sorghum, Andropogon, Coelorhachis, Coix, Cymbopogon, Echinoloa, Erianthus, Hyparrhenia, Leptochloa, Panicum, Paspalum, Pennisetum, Saccharum, Schizachyrum, Spartina, Sporobolus, Themeda, Thripsacum, Vetiveria und Zea geerntet werden.

18. Verfahren nach Anspruch 17, **dadurch gekennzeichnet, daß** C₄-Pflanzen, ausgewählt aus den Arten Sorghum allmum, Sorghum halapense, Sorghum versicolor, Sorghum bicolor (Sorte: CV-Silk), Sorghum bicolor var. arundinacaeum, Sorghum bicolor var. verticilliflorum, Sorghum caucasicum, Sorghum drummondii, Sorghum giganteum, Sorghum milliaceum, Sorghum milliaceum var. parvispiculum, Sorghum nidium, Sorghum pugionifolium, Sorghum serratum, Sorghum stapffii, Sorghum sudanense, Sorghum vulgare, Sorghum zizanioides und Sorghum adans geerntet werden.

19. Verfahren nach Anspruch 13 oder 14, **dadurch gekennzeichnet, daß** Pflanzen, ausgewählt aus den Arten Cannabis sativa, Cannabis sativa ssp. indica, Cannabis sativa ssp. sativa, Cannabis sativa ssp. sativa gigantea (var. chinensis), Cannabis sativa ssp. sativa (Dc., Cannabis gigantea Del. ex. Vilm; Riesenhanf) und Dicksonia antarctica.

20. Verfahren nach einem der Ansprüche 13 bis 19, **dadurch gekennzeichnet, daß** die Pflanzen mittels einer Hammermühle unmittelbar nach dem Ernten zermahlen werden.

21. Verfahren nach Anspruch 13 oder 15, **dadurch gekennzeichnet, daß** der Zuschlagstoff ausgewählt wird aus Pflanzenölen.

22. Verfahren nach Anspruch 13 oder 15, **dadurch gekennzeichnet, daß** der Zuschlagsstoff ausgewählt wird aus Polyacrylamidgranulaten, Tonmineralmischungen, Lavagesteinsmehl, Bims, Bentonit, Sand, Altpapier, Flugasche aus der Braunkohleverbrennung, Braunkohleabfälle und Düngemitteln..

23. Verfahren nach Anspruch 13 oder 15, **dadurch gekennzeichnet, daß** der Zuschlagstoff ausgewählt wird aus Seetangextrakt, Rhizinusschrot, Hornspäne, Hornmehl, Blutmehl, Weichholzspäne, Baumwollabfällen, Flachsabfällen, Textilabfällen, Kokosfasern und Lauberde.

24. Verfahren nach Anspruch 13 oder 15, **dadurch gekennzeichnet, daß** der Zuschlagstoff ausgewählt wird aus Stickstoff-fixierenden Bakterien, Pflanzenhormonen, Vitaminen, Fungiziden und Aminosäuren.

## Claims

1. A cultivation substrate, **characterized by** comminuted plants selected from among knot grass, C₄ plants and plants of the Cannabis and Dicksonia genuses, except for cultivation substrate obtained through composting and containing an amount of Miscanthus.

2. A cultivation substrate according to claim 1, **characterized by** comminuted polyploid knot grass and/or C₄ plants.

3. A cultivation substrate according to claim 1, **characterized by** comminuted C₄ plants from the genuses Sorghum, Andropogon, Coelorhachis, Coix, Cymbopogon, Echinoloa, Erianthus, Hyparrhenia, Leptochloa, Panicum, Paspalum, Pennisetum, Saccharum, Schizachyrum, Spartina, Sporobolus, Themeda, Thripsacum, Vetiveria and Zea.

4. A cultivation substrate according to claim 3, **characterized by** comminuted C₄ plants of the species Sorghum allmum, Sorghum halapense, Sorghum versicolor, Sorghum bicolor CV-Silk, Sorghum bicolor var. arundiancaeum, Sorghum bicolor var. verticilliflorum, Sorghum caucasicum, Sorghum drummondii, Sorghum giganteum, Sorghum milliaceum, Sorghum milliaceum var. parvispiculum, Sorghum nidium, Sorghum pugionifolium, Sorghum serratum, Sorghum stapffii, Sorghum sudanense, Sorghum vulgare, Sorghum zizanioides or Sorghum adans.

5. A cultivation substrate according to any of claims 1 to 4, **characterized by** comminuted knot grass and/or C₄ plants having a natural residual moisture of from 15% to 25%.

6. A cultivation substrate according to claim 5, **characterized in that** the natural residual moisture is from 18% to 20%.

7. A cultivation substrate according to claim 1, **characterized by** comminuted plants of the species Cannabis sativa, Cannabis sativa ssp. indica, Cannabis sativa ssp. sativa, Cannabis sativa ssp. sativa gigantea (var. chinensis), Cannabis sativa ssp. sativa (Dc., Cannabis gigantea Del. ex. Vilm; giant hemp) or Dicksonia antarctica.

8. A cultivation substrate according to any of claims 1 to 7, **characterized in that** it additionally contains an additive.

9. A cultivation substrate according to claim 8, **characterized in that** said additive is selected from vegetable oils.

10. A cultivation substrate according to claim 8, **characterized in that** said additive is selected from polyacrylamide granules, clay mineral mixtures, ground lava rock, pumice, bentonite, sand, waste paper, fly ash from brown-coal combustion, brown-coal waste and fertilizers.

11. A cultivation substrate according to claim 8, **characterized in that** said additive is selected from seaweed extract, coarse castor powder, horn chips, horn meal, blood meal, softwood chips, cotton waste, flax waste, textile waste, coconut fibers and leaf mold.

12. A cultivation substrate according to claim 8, **characterized in that** said additive is selected from nitrogen-fixing bacteria, plant hormones, vitamins, fungicides and amino acids.

13. A method of preparing cultivation substrate, **characterized by** the steps of:
a) harvesting plants selected from knot grass, plants of the Cannabis and Dicksonia genuses and C₄ plants, except for Miscanthus;
b) comminuting the plants; and optionally
c) mixing the resultant biomass with at least one additive.

14. A method according to claim 13, **characterized in that** the plants are harvested at a time when the plants have a natural residual moisture of from 15% to 25% due to the season.

15. A method according to claim 13 or 14, **characterized in that** the biomass is composted, optionally together with additives.

16. A method according to claim 13 or 14, **characterized in that** polyploid knot grass and/or C₄ plants are harvested.

17. A method according to claim 13 or 14, **characterized in that** C₄ plants selected from the genuses Sorghum, Andropogon, Coelorhachis, Coix, Cymbopogon, Echinoloa, Erianthus, Hyparrhenia, Leptochloa, Panicum, Paspalum, Pennisetum, Saccharum, Schizachyrum, Spartina, Sporobolus, Themeda, Thripsacum, Vetiveria and Zea are harvested.

18. A method according to claim 17, **characterized in that** C₄ plants selected from the species Sorghum allmum, Sorghum halapense, Sorghum versicolor, Sorghum bicolor, (variety: CV-Silk), Sorghum bicolor var. arundinacaeum, Sorghum bicolor var. verticilliflorum, Sorghum caucasicum, Sorghum drummondii, Sorghum giganteum, Sorghum milliaceum, Sorghum milliaceum var. parvispiculum, Sorghum nidium, Sorghum pugionifolium, Sorghum serratum, Sorghum stapffii, Sorghum sudanense, Sorghum vulgare, Sorghum zizanioides and Sorghum adans are harvested.

19. A method according to claim 13 or 14, **characterized in that** plants are selected from the species Cannabis sativa, Cannabis sativa ssp. indica, Cannabis sativa ssp. sativa, Cannabis sativa ssp. sativa gigantea (var. chinensis), Cannabis sativa ssp. sativa (Dc., Cannabis gigantea Del. ex. Vilm; giant hemp) and Dicksonia antarctica.

20. A method according to any of claims 13 to 19, **characterized in that** the plants are crushed by means of a hammer mill directly after harvesting.

21. A method according to claim 13 or 15, **characterized in that** the additive is selected from vegetable oils.

22. A method according to claim 13 or 15, **characterized in that** said additive is selected from polyacrylamide granules, clay mineral mixtures, ground lava rock, pumice, bentonite, sand, waste paper, fly ash from brown-coal combustion, brown-coal waste and fertilizers.

23. A method according to claim 13 or 15, **characterized in that** said additive is selected from seaweed extract, coarse castor powder, horn chips, horn meal, blood meal, softwood chips, cotton waste, flax waste, textile waste, coconut fibers and leaf mold.

24. A method according to claim 13 or 15, **characterized in that** said additive is selected from nitrogen-fixing bacteria, plant hormones, vitamins, fungicides and amino acids.

## Revendications

1. Substrat de culture **caractérisé par** des plantes coupées en petits morceaux, choisies parmi la renouée du Japon, les plantes C₄ et les plantes des genres *Cannabis et Dicksonia*, à l'exception des substrats de culture obtenus par compostage, qui contiennent une proportion de *Miscanthus.*

2. Substrat de culture selon la revendication 1, **caractérisé par** des plantes de renouée du Japon et/ou C₄, polyploïdes, coupées en petits morceaux.

3. Substrat de culture selon la revendication 1, **caractérisé par** des plantes C₄ coupées en petits morceaux des genres *Sorghum*, *Andropogon*, *Coelorhachis, Coix*, *Cymbopogon*, *Echinoloa*, *Erianthus*, *Hyparrhenia*, *Leptochloa*, *Panicum*, *Paspalum*, *Pennisetum*, *Saccharum*, *Schizachyrum, Spartina*, *Sporobolus*, *Themeda, Thripsacum*, *Vetiveria* et *Zea.*

4. Substrat de culture selon la revendication 3, **caractérisé par** des plantes C₄ coupées en petits morceaux des espèces *Sorghum allmum*, *Sorghum halapense*, *Sorghum versicolor*, *Sorghum bicolor* CV-Silk, *Sorghum bicolor* var. *arundinacaeum*, *Sorghum bicolor* var. *verticilliflorum*, *Sorghum caucasicum*, *Sorghum drummondii, Sorghum giganteum, Sorghum milliaceum, Sorghum milliaceum* var. *parvispiculum, Sorghum nidium, Sorghum pugionifolium, Sorghum serratum, Sorghum stapffii, Sorghum sudanense, Sorghum vulgare, Sorghum zizanioides* ou *Sorghum adans.*

5. Substrat de culture selon l'une quelconque des revendications 1 à 4, **caractérisé par** des plantes de renouée du Japon et/ou C₄, coupées en petits morceaux avec une humidité résiduelle naturelle de 15 à 25%.

6. Substrat de culture selon la revendication 5, **caractérisé en ce que** l'humidité résiduelle naturelle est de 18 à 20%.

7. Substrat de culture selon la revendication 1, **caractérisé par** des plantes coupées en petits morceaux des espèces *Cannabis sativa*, *Cannabis sativa* ssp. *indica*, *Cannabis sativa* ssp. *sativa*, *Cannabis sativa* ssp. *sativa gigantea* (var. *chinensis*), *Cannabis sativa* ssp. *sativa* (Dc., *Cannabis gigantea* Del. ex. Vilm ; chanvre géant) ou *Dicksonia antartica*.

8. Substrat de culture selon l'une quelconque des revendications 1 à 7, **caractérisé en ce qu'**il contient en outre, au moins un additif.

9. Substrat de culture selon la revendication 8, **caractérisé en ce que** l'additif est choisi parmi les huiles végétales.

10. Substrat de culture selon la revendication 8, **caractérisé en ce que** l'additif est choisi parmi les granulés de polyacrylamide, les mélanges de minéraux d'argiles réfractaires, les poudres de roches volcaniques, la pierre ponce, la bentonite, le sable, le papier usagé, les cendres volantes provenant de la combustion de la lignite, les déchets de lignite et les engrais.

11. Substrat de culture selon la revendication 8, **caractérisé en ce que** l'additif est choisi parmi les extraits de varech, le gruau de ricin, la râpure de corne, la farine de corne, le sang séché, la râpure de bois tendre, les déchets de coton, les rebus de lin, les rebus textiles, les fibres de noix de coco et le compost de feuilles.

12. Substrat de culture selon la revendication 8, **caractérisé en ce que** l'additif est choisi parmi les bactéries fixant l'azote, les hormones végétales, les vitamines, les fongicides et les acides aminés.

13. Procédé de préparation d'un substrat de culture, **caractérise par** les étapes consistant à :
a) Récolter des plantes, choisies parmi la renouée du Japon, les plantes des genres *Cannabis* et *Dicksonia* et les plantes C₄, à l'exception du *Miscanthus* ;
b) Couper les plantes en petits morceaux, et le cas échéant,
c) Mélanger la biomasse ainsi obtenue avec au moins un additif.

14. Procédé selon la revendication 13, **caractérisé en ce que** les plantes sont récoltées à un moment où celles-ci présentent une humidité résiduelle naturelle, saisonnière de 15 à 25%.

15. Procédé selon la revendication 13 ou 14, **caractérisé en ce que** la biomasse est compostée, éventuellement avec des additifs.

16. Procédé selon la revendication 13 ou 14, **caractérisé en ce que** l'on récolte des renouées du Japon et/ou des plantes C₄ polyploïdes.

17. Procédé selon la revendication 13 ou 14, **caractérisé en ce que** l'on récolte des plantes C₄ choisies parmi les genres *Sorghum, Andropogon, Coelorhachis, Coix, Cymbopogon, Echinoloa, Erianthus, Hyparrhenia, Leptochloa, Panicum, Paspalum, Pennisetum,* *Saccharum, Schizachyrum, Spartina, Sporobolus, Themeda*, *Thripsacum, Vetiveria* et *Zea.*

18. Procédé selon la revendication 17, **caractérisé en ce que** l'on récolte des plantes C₄ choisies parmi les types *Sorghum allmum*, *Sorghum halapense*, *Sorghum versicolor*, *Sorghum bicolor* CV-Silk, *Sorghum bicolor* var. *arundinacaeum*, *Sorghum bicolor* var. *verticilliflorum*, *Sorghum caucasicum*, *Sorghum drummondii*, *Sorghum giganteum*, *Sorghum milliaceum*, *Sorghum milliaceum* var. *parvispiculum*, *Sorghum nidium, Sorghum pugionifolium, Sorghum serratum*, *Sorghum stapffii, Sorghum sudanense, Sorghum vulgare, Sorghum zizanioides* et *Sorghum adans.*

19. Procédé selon la revendication 13 ou 14, **caractérisé en ce que** l'on récolte des plantes choisies parmi les types *Cannabis sativa, Cannabis sativa* ssp. *indica, Cannabis sativa* ssp. *sativa, Cannabis sativa* ssp. *sativa gigantea* (var. *chinensis*), *Cannabis sativa* ssp. *sativa* (Dc., *Cannabis gigantea* Del. ex. Vilm ; chanvre géant) et *Dicksonia antartica*.

20. Procédé selon l'une quelconque des revendications 13 à 19, **caractérisé en ce que** les plantes sont broyées à l'aide d'un broyeur à marteaux, immédiatement après la récolte.

21. Procédé selon l'une quelconque des revendications 13 ou 15, **caractérisé en ce que** l'additif est choisi parmi les huiles végétales.

22. Procédé selon l'une quelconque des revendications 13 ou 15, **caractérisé en ce que** l'additif est choisi parmi les granulés de polyacrylamide, les mélanges de minéraux d'argiles réfractaires, les poudres de roches volcaniques, la pierre ponce, la bentonite, le sable, le papier usagé, les cendres volantes provenant de la combustion de la lignite, les déchets de lignite et les engrais.

23. Procédé selon l'une quelconque des revendications 13 ou 15, **caractérisé en ce que** l'additif est choisi parmi les extraits de varech, le gruau de ricin, la râpure de corne, la farine de corne, le sang séché, la râpure de bois tendre, les déchets de coton, les rebus de lin, les rebus textiles, les fibres de noix de coco et le compost de feuilles.

24. Procédé selon l'une quelconque des revendications 13 ou 15, **caractérisé en ce que** l'additif est choisi parmi les bactéries fixant l'azote, les hormones végétales, les vitamines, les fongicides et les acides aminés.
